(19) Europäisches Patentamt
European Patent Office
Office européen des brevets

(11) **EP 4 718 118 A2**

(12) **EUROPÄISCHE PATENTANMELDUNG**

(43) Veröffentlichungstag:
**01.04.2026  Patentblatt 2026/14**

(21) Anmeldenummer: **26151230.5**

(22) Anmeldetag: **16.11.2021**

(51) Internationale Patentklassifikation (IPC):
***G01S 15/931*** *(2020.01)*

(52) Gemeinsame Patentklassifikation (CPC):
**G01S 7/539; G01S 15/42; G01S 15/931;**
G01S 2015/932

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **03.12.2020  DE 102020215255**

(62) Dokumentnummer(n) der früheren Anmeldung(en)
nach Art. 76 EPÜ:
**21823751.9 / 4 256 371**

(71) Anmelder: **AUMOVIO Autonomous Mobility
Germany GmbH
85057 Ingolstadt (DE)**

(72) Erfinder:
• **Suleiman, Wassim
85057 Ingolstadt (DE)**

• **Brown, Christopher
85057 Ingolstadt (DE)**
• **Gad, Ahmed Hamdy
60488 Frankfurt am Main (DE)**

(74) Vertreter: **Aumovio Corporation
AUMOVIO Germany GmbH
Taunusstraße 36
80807 München (DE)**

Bemerkungen:
Diese Anmeldung ist am 12-01-2026 als
Teilanmeldung zu der unter INID-Code 62 erwähnten
Anmeldung eingereicht worden.

(54) **VERFAHREN ZUR HÖHENKLASSIFIKATION VON OBJEKTEN MITTELS ULTRASCHALLSENSORIK**

(57)  Die Erfindung bezieht sich auf ein Verfahren zur Höhenklassifikation eines Objekts mittels zumindest eines Ultraschallsensors eines Fahrzeugs.

Fig. 4

**Beschreibung**

Die Erfindung betrifft ein Verfahren zur Höhenklassifikation von Objekten im Umgebungsbereich von Fahrzeugen mittels Ultraschallsensorik.

Es ist bekannt, Umgebungsinformationen im Bereich eines Fahrzeugs mittels Ultraschallsensoren zu erfassen, beispielsweise um beim Einparken den Abstand zu anderen Objekten zu erfassen.

Ultraschallsensoren liefern basierend auf der Laufzeit des Ultraschallsignals Abstandsinformationen, jedoch keine Höheninformationen des detektierten Objekts.

Höheninformationen können durch die Nutzung weiterer Sensoren, beispielsweise Kameras, ermittelt werden.

Nachteilig an der Ermittlung von Höheninformationen mittels weiterer Sensoren ist, dass dafür zusätzliche Hardware erforderlich ist, was den technischen Aufwand erhöht. Zudem müssen die von unterschiedlichen Sensoren bereitgestellten Informationen zusammengeführt bzw. fusioniert werden, um die Höheninformationen zu erhalten. Dies erfordert zusätzliche Rechenkapazitäten und erhöht damit wiederum den technischen Aufwand.

Ausgehend hiervon ist es Aufgabe der Erfindung, ein Verfahren zur Höhenklassifikation von Objekten im Umgebungsbereich von Fahrzeugen mittels Ultraschallsensorik anzugeben, das einen geringen Hardwareaufwand erfordert und damit kostensparend ist.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Höhenklassifikation von Objekten ist Gegenstand des nebengeordneten Patentanspruchs 10 und ein Fahrzeug mit einem solchen System ist Gegenstand des nebengeordneten Patentanspruchs 15.

Gemäß einem ersten Aspekt bezieht sich die Erfindung auf ein Verfahren zur Höhenklassifikation eines Objekts mittels eines Ultraschallsensors, der an einem Fahrzeug vorgesehen ist. Das Verfahren umfasst die folgenden Schritte: Zunächst wird in einem Sendezyklus ein Ultraschallsignal durch den Ultraschallsensor des Fahrzeugs ausgesendet. Der Ultraschallsensor weist dabei eine gewisse Empfangsreichweite auf. Diese gibt an, bis zu welchem Abstand Objekte durch den Ultraschallsensor detektierbar sind.

Nach dem Sendezyklus wird ein Empfangszyklus durchgeführt, in dem reflektierte Signalanteile des Ultraschallsignals empfangen werden. Der Empfangszyklus weist ein Empfangszeitfenster auf, das einen Empfang von Echos mit einer Laufzeit ermöglicht, die zumindest der doppelten Empfangsreichweite des Ultraschallsensors entspricht. Damit können auch Echos, die aus Mehrfachreflexionen zwischen dem Objekt und dem Sensor herrühren, detektiert werden.

Anschließend, insbesondere nach dem Ende des Empfangszyklus, wird geprüft, ob in dem Empfangszyklus zumindest ein erstes und ein zweites Echo empfangen wurden, wobei die Laufzeit des zweiten Echos einem ganzzahligen Vielfachen der Laufzeit des ersten Echos entspricht. Wenn ein zweites Echo erkannt wird, dessen Laufzeit ein ganzzahliges Vielfaches der Laufzeit des ersten Echos ist, ist dies ein Indiz dafür, dass das zweite Echo aufgrund einer Mehrfachreflexion die Strecke zwischen Sensor und Objekt zumindest ein zweites Mal durchlaufen hat. Des Weiteren kann geprüft werden, ob das zweite Echo eine geringere Signalamplitude hat als das erste Echo, insbesondere die Signalamplitude des zweiten Echos mehr als 50% geringer ist als die Signalamplitude des ersten Echos. Dies wäre ein weiteres Indiz dafür, dass das zweite Echo auf eine Mehrfachreflexion zurückzuführen ist.

Zuletzt wird ein detektiertes Objekts in eine Höhenklasse abhängig davon einklassifiziert, ob zumindest ein erstes und ein zweites Echo empfangen wurden, wobei die Laufzeit des zweiten Echos ein ganzzahliges Vielfaches der Laufzeit des ersten Echos ist. Diese Klassifikationsregel stützt sich auf der Erkenntnis, dass Objekte, die zumindest eine Höhe aufweisen, die gleich oder größer als die Höhe ist, in der der Sensor am Fahrzeug angeordnet ist, zu Mehrfachreflexionen führen können, wohingegen niedrigere Objekte aufgrund der schrägen Ausbreitungsrichtung des Ultraschallsignals keine Mehrfachreflexionen verursachen.

Der technische Vorteil des erfindungsgemäßen Verfahrens besteht darin, dass allein basierend auf Informationen, die durch den Ultraschallsensor bereitgestellt werden, eine Höhenklassifikation von Objekten möglich wird, was den Aufwand für die Höhenklassifikation von Objekten wesentlich reduziert.

Gemäß einem Ausführungsbeispiel wird ein Objekt als hohes Objekt klassifiziert, wenn ein zweites Echo erkannt wurde, dessen Laufzeit einem ganzzahligen Vielfachen der Laufzeit des ersten Echos entspricht, wobei ein hohes Objekt zumindest eine Höhe gleich der vertikal gemessenen Höhe, in der der Ultraschallsensor am Fahrzeug vorgesehen ist, aufweist. Derart hohe Objekte ermöglichen Mehrfachreflexionen zwischen dem Sensor bzw. Fahrzeug und dem Objekt, die sich vorzugsweise im Wesentlichen in einer horizontalen Ebene vollziehen. Wenn Mehrfachreflexionen vorliegen, kann damit davon ausgegangen werden, dass das Objekt zumindest eine Höhe aufweist, die der Sensorhöhe entspricht.

Gemäß einem Ausführungsbeispiel wird ein Objekt als niedriges Objekt klassifiziert, wenn kein zweites Echo erkannt wurde, dessen Laufzeit einem ganzzahligen Vielfachen der Laufzeit des ersten Echos entspricht, wobei ein niedriges Objekt eine Höhe kleiner als die vertikal gemessene Höhe, in der der Ultraschallsensor am Fahrzeug vorgesehen ist, aufweist. Diese Klassifizierungsregel macht sich zu Nutze, dass ein Objekt, das keine Mehrfachreflexionen hervorruft, in aller Regel niedriger als die Sensorhöhe sein wird, da der reflektierte Signalanteil des Ultraschallsignals schräg von unten auf den Sensor auftrifft und bei einer erneuten Reflexion schräg nach oben reflektiert wird.

Gemäß einem Ausführungsbeispiel wird ein Objekt als hohes Objekt klassifiziert, wenn zumindest ein zweites Echo erkannt wurde, dessen Laufzeit einem ganzzahligen Vielfachen der Laufzeit des ersten Echos entspricht, wobei ein hohes Objekt eine Höhe gleich oder größer als die vertikal gemessene Höhe, in der der Ultraschallsensor am Fahrzeug vorgesehen ist, aufweist und der Abstand des Objekts zum Sensor kleiner als 2m ist, insbesondere 1,5m oder kleiner. Dadurch kann ohne eine Vergrößerung der Zeitspanne des Empfangszyklus eine Doppelreflexion erfasst werden.

Gemäß einem Ausführungsbeispiel werden, für den Fall, dass im Empfangszyklus zumindest drei Echos empfangen werden, wobei die Laufzeit des zweiten Echos ein ganzzahliges Vielfaches des ersten Echos ist und das dritte Echo eine Laufzeit aufweist, die kein gemeinsames Vielfaches der Laufzeit des ersten Echos ist, zwei Objekte detektiert, wobei ein erstes Objekt, das dem ersten und zweiten Echo zugeordnet ist, als hohes Objekt klassifiziert wird und ein zweites Objekt, das dem dritten Echo zugeordnet ist, als niedriges Objekt klassifiziert wird. Wenn nämlich ein Objekt zu einer Mehrfachreflexion führt und ein weiteres nicht, muss sich das Objekt, das keine Mehrfachreflexion hervorruft, vor dem weiteren Objekt befinden und niedriger sein, ansonsten würde es verschattet. Dies gilt jedenfalls dann, wenn die Objekte in gleicher oder im Wesentlichen gleicher radialer Richtung, d.h. in gleichem oder im Wesentlichen gleichem Azimutwinkel in Bezug auf den Ultraschallsensor angeordnet sind.

Gemäß einem Ausführungsbeispiel wird bei dem zuvor beschriebenen Ausführungsbeispiel zusätzlich geprüft, ob das erste und zweite Objekt den gleichen Azimutwinkel in Bezug auf den Ultraschallsensor haben. Dies kann beispielsweise durch Trilateration, durch Bestimmung der Dopplerfrequenzverschiebung aufgrund der Radialgeschwindigkeitskomponente des Fahrzeugs relativ zum Objekt und/oder durch Tracking des erfassten Objekts über einen gewissen Zeitraum (beispielsweise durch einen Kalman-Filter) erfolgen.

Gemäß einem Ausführungsbeispiel weist das Fahrzeug eine Recheneinheit auf, die zusätzlich zu dem vorbeschriebenen Höhenklassifikationsverfahren als erstes Verfahren zumindest ein weiteres, zweites Verfahren zur Höhenklassifikation bereitstellt. Die Höhenklassifikation des Objekts wird basierend auf einer gewichteten Kombination der Klassifikationsergebnisse des ersten und zweiten Verfahrens vorgenommen. Dadurch kann die Zuverlässigkeit der Höhenklassifikation gesteigert werden. Es versteht sich, dass auch Ergebnisse von mehr als zwei Höhenklassifikationsverfahren miteinander kombiniert werden können, um basierend auf einer gewichteten Kombination der Klassifikationsergebnisse ein Gesamtklassifikationsergebnis zu erhalten.

Gemäß einem Ausführungsbeispiel wird ein maschinelles Lernverfahren verwendet, um Gewichtungsfaktoren zu ermitteln und/oder nach deren Ermittlung zu modifizieren, um basierend auf diesen Gewichtungsfaktoren die gewichtete Kombination der Klassifikationsergebnisse des ersten und zweiten Verfahrens vorzunehmen. Vorzugsweise wird basierend auf Trainingsdaten ein neuronales Netz trainiert, so dass nach der Trainingsphase eine gewichtete Kombination der Klassifikationsergebnisse basierend auf statistischen Zusammenhängen, die in der Trainingsphase erkannt wurden, erfolgt.

Gemäß einem Ausführungsbeispiel wird ein maschinelles Lernverfahren verwendet, um basierend auf mehreren unterschiedlichen Eingangsinformationen ein Höhenklassifikationsergebnis zu erhalten. Die Eingangsinformationen können beispielsweise sein:

- Anzahl der Mehrfachreflexionen, die einem ausgesendeten Ultraschallsignal zugeordnet sind;
- Amplitude des/der empfangenen Echos;
- Merkmale, die durch ein Tracking der Echos erhalten werden, beispielsweise Kalman-Gewinn (gain); Mittelwert der Amplitudenvarianz; Abstandsvarianz, etc.
- Berücksichtigung der Tatsache, dass andere Objekte vor dem erfassten Objekt sind;
- Aktuelles Erfassungsszenario;

Derartige Eingangsinformationen können in einer Vielzahl von Szenarien erfasst und zum Training des neuronalen Netzes verwendet werden.

Gemäß einem Ausführungsbeispiel wird abhängig von der aktuellen Fahrsituation zunächst ein Erfassungsszenario bestimmt. Auf der Basis des ermittelten Erfassungsszenarios wird eine Auswahl zumindest eines weiteren Höhenklassifikationsverfahrens vorgenommen, basierend auf dem in diesem ermittelten Erfassungsszenario eine Höhenklassifikation möglich ist. Somit ist eine Selektion des weiteren Höhenklassifikationsverfahrens in Abhängigkeit von dem jeweiligen erkannten Erfassungsszenario möglich. Das Erfassungsszenario kann beispielsweise angeben, ob die Fahrtrichtung parallel oder senkrecht zu einem detektierten Objekt verläuft.

Gemäß einem Ausführungsbeispiel wird basierend auf Wahrscheinlichkeitswerten, die die Wahrscheinlichkeit angeben, dass die aktuelle Fahrsituation des Fahrzeugs einem bestimmten Erfassungsszenario zuzuordnen ist, eine Wahrscheinlichkeit berechnet, dass ein Objekt in eine bestimmte Höhenkategorie einzugruppieren ist, und zwar basierend auf einer Summe von bedingten Wahrscheinlichkeitswerten, wobei die bedingten Wahrscheinlichkeitswerte jeweils angeben, wie hoch die Wahrscheinlichkeit ist, dass ein Objekt in eine bestimmte Höhenkategorie unter der Bedingung, dass ein bestimmtes Erfassungsszenario vorliegt, einzuordnen ist. Dadurch können Fehler bzw. Ungenauigkeiten in der Höhenklassifikation, die aufgrund einer falschen Zuordnung des Fahrszenarios zu einer bestimmten Fahrsituation herrühren, wirksam vermieden bzw. zumindest reduziert werden.

Gemäß einem weiteren Aspekt betrifft die Erfindung ein System zur Höhenklassifikation eines Objekts. Das System umfasst zumindest einen Ultraschallsensor und eine Recheneinheit, die zur Auswertung der vom Ultraschallsensor bereitgestellten Informationen ausgebildet ist. Das System ist dazu ausgebildet, folgende Schritte zu vollziehen:

a) Aussenden eines Ultraschallsignals durch den Ultraschallsensor des Fahrzeugs in einem Sendezyklus;
b) Durchführen eines Empfangszyklus, wobei der Empfangszyklus ein Empfangszeitfenster aufweist, das einen Empfang von Echos mit einer Laufzeit ermöglicht, die zumindest der doppelten Empfangsreichweite des Ultraschallsensors entspricht;
c) Prüfen, ob in dem Empfangszyklus zumindest ein erstes und ein zweites Echo empfangen wurden, wobei die Laufzeit des zweiten Echos einem ganzzahligen Vielfachen der Laufzeit des ersten Echos entspricht;
d) Klassifikation eines detektierten Objekts in eine Höhenklasse abhängig davon, ob zumindest ein erstes und ein zweites Echo empfangen wurden, wobei die Laufzeit des zweiten Echos ein ganzzahliges Vielfaches der Laufzeit des ersten Echos ist.

Der technische Vorteil des erfindungsgemäßen Systems besteht darin, dass allein basierend auf Informationen, die durch den Ultraschallsensor bereitgestellt werden, eine Höhenklassifikation von Objekten möglich wird, was den Aufwand für die Höhenklassifikation von Objekten wesentlich reduziert.

Gemäß einem Ausführungsbeispiel des Systems ist die Recheneinheit dazu ausgebildet, ein Objekt als hohes Objekt zu klassifizieren, wenn ein zweites Echo erkannt wurde, dessen Laufzeit einem ganzzahligen Vielfachen der Laufzeit des ersten Echos entspricht, wobei ein hohes Objekt zumindest eine Höhe gleich der vertikal gemessenen Höhe, in der der Ultraschallsensor am Fahrzeug vorgesehen ist, aufweist. Derart hohe Objekte ermöglichen Mehrfachreflexionen zwischen dem Sensor bzw. Fahrzeug und dem Objekt, die sich vorzugsweise im Wesentlichen in einer horizontalen Ebene vollziehen. Wenn Mehrfachreflexionen vorliegen, kann damit davon ausgegangen werden, dass das Objekt zumindest eine Höhe aufweist, die der Sensorhöhe entspricht.

Gemäß einem Ausführungsbeispiel des Systems ist die Recheneinheit dazu ausgebildet, ein Objekt als niedriges Objekt zu klassifizieren, wenn kein zweites Echo erkannt wurde, dessen Laufzeit einem ganzzahligen Vielfachen der Laufzeit des ersten Echos entspricht, wobei ein niedriges Objekt eine Höhe kleiner als die vertikal gemessene Höhe, in der der Ultraschallsensor am Fahrzeug vorgesehen ist, aufweist. Diese Klassifizierungsregel macht sich zu Nutze, dass ein Objekt, das keine Mehrfachreflexionen hervorruft, in aller Regel niedriger als die Sensorhöhe sein wird, da der reflektierte Signalanteil schräg von unten auf den Sensor auftrifft und bei einer erneuten Reflexion schräg nach oben reflektiert wird.

Gemäß einem Ausführungsbeispiel des Systems ist die Recheneinheit dazu ausgebildet, für den Fall dass im Empfangszyklus zumindest drei Echos empfangen werden, wobei die Laufzeit des zweiten Echos ein ganzzahliges Vielfaches des ersten Echos ist und das dritte Echo eine Laufzeit aufweist, die kein gemeinsames Vielfaches der Laufzeit des ersten Echos ist, zwei Objekte zu detektieren, wobei ein erstes Objekt, das dem ersten und zweiten Echo zugeordnet ist, als hohes Objekt klassifiziert wird und ein zweites Objekt, das dem dritten Echo zugeordnet ist, als niedriges Objekt klassifiziert wird. Wenn nämlich ein Objekt zu einer Mehrfachreflexion führt und ein weiteres nicht, muss sich das Objekt, das keine Mehrfachreflexion hervorruft, vor dem weiteren Objekt befinden und niedriger sein, ansonsten würde es verschattet. Dies gilt jedenfalls dann, wenn die Objekte in gleicher oder im Wesentlichen gleicher radialer Richtung, d.h. in gleichem oder im Wesentlichen gleichem Azimutwinkel in Bezug auf den Ultraschallsensor angeordnet sind.

Gemäß einem Ausführungsbeispiel des Systems ist die Recheneinheit dazu ausgebildet, zusätzlich zu überprüfen, ob das erste und zweite Objekt den gleichen Azimutwinkel in Bezug auf den Ultraschallsensor haben.

Gemäß einem nochmals weiteren Aspekt betrifft die Erfindung ein Fahrzeug mit einem System zur Höhenklassifikation von Objekten gemäß einem der vorher beschriebenen Ausführungsbeispiele.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

Fig. 1    beispielhaft und schematisch ein Fahrzeug mit einem Ultraschallsensor und die Ausbreitung der Ultraschallsignale, die sich aufgrund einer Reflexion an einem detektierten, niedrigen Objekt und einer weiteren Reflexion im Bereich des Sensors bzw. des Fahrzeugs ergeben;

Fig. 2 beispielhaft und schematisch ein Fahrzeug mit einem Ultraschallsensor und die Ausbreitung der Ultraschallsignale, die sich aufgrund einer Reflexion an einem detektierten, hohen Objekt und einer Mehrfachreflexion am Sensor bzw. am Fahrzeug ergeben;

Fig. 3 beispielhaft und schematisch ein Fahrzeug mit einem Ultraschallsensor und die Ausbreitung der Ultraschallsignale, die sich aufgrund von Reflexionen an einem detektierten, niedrigen Objekt und einem detektierten, hohen Objekt ergeben; und

Fig. 4 beispielhaft ein Ablaufdiagramm, das die Schritte eines Verfahrens zur Höhenklassifikation eines Objekts verdeutlicht.

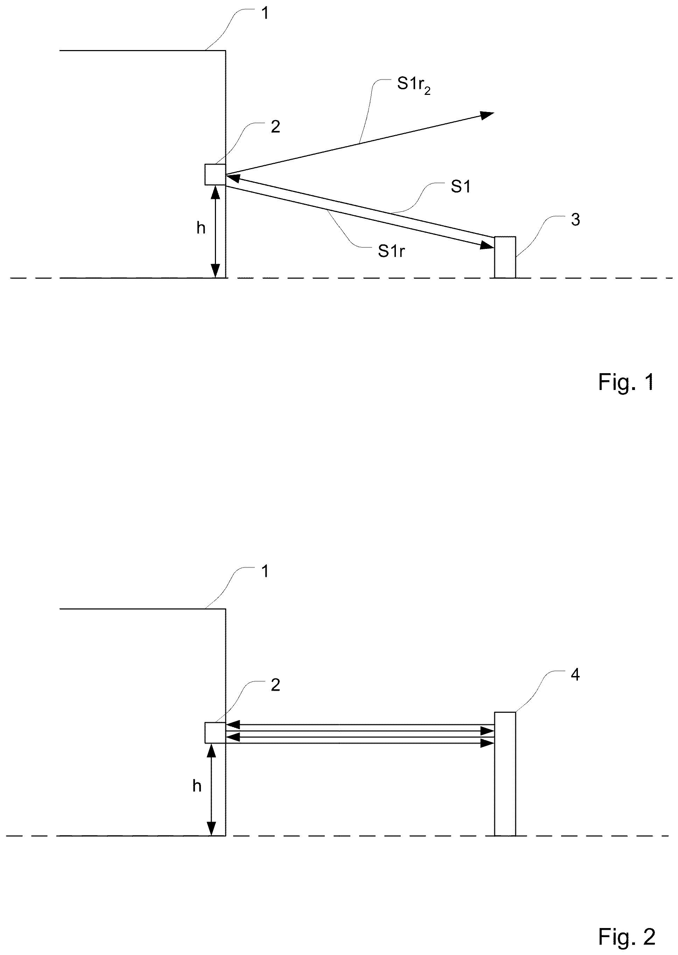

Figur 1 zeigt beispielhaft eine Erfassungssituation, bei der mittels eines Ultraschallsensors 2 eines Fahrzeugs 1 ein Objekt 3 erfasst wird, das niedriger ist als die Höhe h des Ultraschallsensors 2. Die Höhe h wird dabei beispielsweise als der Abstand der Mitte des Ultraschallsensors 2 zur Fahrbahnhöhe gemessen.

Wie in Fig 1 ersichtlich, wird ein Ultraschallsignal S1 schräg nach unten auf das niedrige Objekt 3 ausgesendet, dort reflektiert und an den Ultraschallsensor 2 rückreflektiert. Dieser rückreflektierte Ultraschallsignalanteil $S1r$ wird am Ultraschallsensors 2 erneut reflektiert und als zweifach reflektierter Ultraschallsignalanteil $S1r_2$ schräg nach oben rückreflektiert. Damit trifft der zweifach reflektierte Ultraschallsignalanteil $S1r_2$ nicht mehr auf das Objekt 3.

Fig. 2 zeigt eine weitere Erfassungssituation, bei der mittels eines Ultraschallsensors 2 eines Fahrzeugs 1 ein Objekt 4 erfasst wird, das zumindest gleichhoch oder höher wie der Ultraschallsensor 2 ist. In diesem Fall ist es möglich, dass Mehrfachreflexionen zwischen dem Ultraschallsensor 2 und dem Objekt 4 auftreten, wie dies mit den Pfeilen in Fig. 2 angedeutet ist. Ein vom Ultraschallsensor 2 ausgesandtes Ultraschallsignal S1 wird am Objekt 4 reflektiert und trifft erneut derart auf den Ultraschallsensor 2 auf, dass eine erneute Reflexion zu dem Objekt 4 hin erfolgt. Dadurch stellen sich Mehrfachreflexionen zwischen Ultraschallsensor 2 und dem Objekt 4 auf, die sich durch eine abnehmende Signalamplitude auszeichnen. Die Mehrfachreflexionen zeichnen sich jedoch dadurch aus, dass diese jeweils ein Vielfaches des Ausbreitungsweges des rückreflektierten Ultraschallsignalanteils $S1r$ aufweisen, so dass damit eine eindeutige Erkennbarkeit der Mehrfachreflexion gewährleistet ist.

Erfindungsgemäß weist ist die Zeitspanne, in der nach einem Sendezyklus reflektierte Signalanteile empfangen werden können, derart gewählt, dass auch derartige Mehrfachreflexionen detektiert werden können. Dies bedeutet insbesondere, dass die Zeitspanne des Empfangszyklus zumindest derart groß bemessen ist, dass reflektierte Signalanteile empfangen werden können, die einen Ausbreitungsweg zurückgelegt haben, der dem vierfachen Empfangsradius des Ultraschallsensors 2 entspricht.

Zur Höhenklassifikation von Objekten wird erfindungsgemäß geprüft, ob im Empfangszyklus mehrere Echos des Ultraschallsignals empfangen wurden, deren Laufzeiten ganzzahlige Vielfache sind. Wenn zumindest ein erstes und ein zweites Echo empfangen wurde, wobei die Laufzeit des zweiten Echos ein ganzzahliges Vielfaches des ersten Echos ist, kann das Objekt als hohes Objekt 4 klassifiziert werden, d.h. es weist zumindest eine Höhe gleich der Höhe h des Ultraschallsensors 2 auf. Falls keine Mehrfachreflexionen mit Laufzeiten als ganzzahlige Vielfache erkannt wurden, lässt dies den Rückschluss zu, dass die Reflexion an einem niedrigen Objekt 3 erfolgt ist.

Vorzugsweise wird zudem geprüft ob das zweite Echo eine kleinere Signalamplitude aufweist als das erste Echo. Dadurch kann zudem geprüft werden, ob das zweite Echo das Resultat einer Mehrfachreflexion ist, da Mehrfachreflexionen zu einer Abschwächung der Signalamplitude führen.

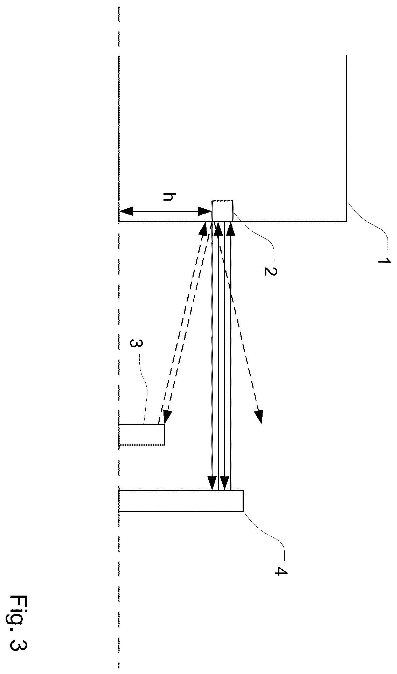

Fig. 3 zeigt eine Erfassungssituation, in der sowohl ein niedriges Objekt 3 als auch ein hohes Objekt 4 von dem Ultraschallsensor 2 erfasst werden, wobei das niedrige Objekt 3 in radialer Richtung des Ultraschallsensors 2 gesehen zwischen dem hohen Objekt 4 und dem Ultraschallsensor 2 liegt.

Das Fahrzeug 1 kann eine Recheneinheit aufweisen, die dazu ausgebildet ist, den Azimutwinkel eines detektierten Objekts relativ zum Fahrzeug 1 zu bestimmen. Die Bestimmung des Azimutwinkel kann beispielsweise mittels mehrerer Ultraschallsensoren durch Trilateration, durch Bestimmung der Dopplerfrequenzverschiebung aufgrund der Radialgeschwindigkeitskomponente des Fahrzeugs 1 und/oder durch Tracking des erfassten Objekts über einen gewissen Zeitraum erfolgen.

Die Recheneinheit des Fahrzeugs, die Umgebungsinformationen basierend auf den Informationen des zumindest einen Ultraschallsensors 2 bereitstellt, kann dazu konfiguriert sein, zu überprüfen, ob bei zumindest zwei Objekten 3, 4, die in derselben radialen Richtung in Bezug auf den Ultraschallsensors 2 angeordnet sind, im Empfangszyklus zumindest drei Ultraschallechos ermittelt werden können, wobei ein zweites Ultraschallecho eine Laufzeit aufweist, die ein ganzzahliges Vielfaches der Laufzeit des ersten Echos ist und das dritte Ultraschallecho ein Einzelecho ist, d.h. es keine weiteren Echos gibt, die eine Laufzeit aufweisen, die ein ganzzahliges Vielfaches der Laufzeit des dritten Ultraschallechos ist.

Dadurch dass das Objekt 4 eine Mehrfachreflexion hervorruft, das Objekt 3 jedoch nicht und die Objekte 3, 4 bezogen auf den Ultraschallsensor 2 in der selben radialen Richtung liegen, lässt sich daraus rückschließen, dass das Objekt 3 ein niedriges Objekt ist und das Objekt 4 ein hohes Objekt.

Zusätzlich ist es möglich, die Höhenklassifikation dadurch zu verbessern, dass mehrere Verfahren zur Höhenklassifikation von Objekten miteinander kombiniert werden, um durch die Kombination von Informationen unterschiedlicher Höhenklassifikationsverfahren eine bessere Klassifikationsgenauigkeit zu erzielen.

Die Kombination mehrerer Verfahren kann auf unterschiedliche Weise erfolgen:
Beispielsweise können Höhenklassifikationsergebnisse durch unterschiedliche Höhenklassifikationsverfahren berechnet werden und dann unter Nutzung von Gewichtungsfaktoren zu einem Gesamtergebnis kombiniert werden. Beispielsweise können Gewichtungsfaktoren verwendet werden, die von der Varianz der Schätzgenauigkeit des jeweiligen Höhenklassifikationsverfahrens abhängen. So kann beispielsweise das Höhenklassifikationsverfahren höher gewichtet werden, dessen Schätzgenauigkeitsvarianz klein ist und umgekehrt.

Alternativ können die Gewichtungsfaktoren basierend auf Informationen bezüglich der Genauigkeit bzw. der Robustheit der jeweiligen Verfahren gewählt werden. Dabei können die Gewichtungsfaktoren desjenigen Verfahrens höher gewählt werden, das eine hohe Schätzgenauigkeit bzw. Robustheit aufweist.

Im Fall, dass keine Informationen hinsichtlich der Schätzgenauigkeit bzw. Robustheit vorliegen, können die Gewichtungsfaktoren gleich gewählt werden, so dass die unterschiedlichen Höhenklassifikationsverfahren gleichgewichtet in das Gesamtergebnis eingehen.

In einem Ausführungsbeispiel wird gemäß der Theorie von Bayes eine aktuelle Klassifikationswahrscheinlichkeit durch in der Vergangenheit ermittelte Informationen und dazugehörige Wahrscheinlichkeiten ermittelt. Insbesondere werden durch unterschiedliche Höhenklassifikationsverfahren Wahrscheinlichkeiten bereitgestellt, die angeben, mit welcher Wahrscheinlichkeit ein bestimmtes Objekt einer Höhenklasse zugeordnet wird. Auch lassen sich mehrere zu unterschiedlichen Zeitpunkten ermittelte Wahrscheinlichkeiten, d.h. Wahrscheinlichkeiten aus unterschiedlichen Sende-Empfangszyklen miteinander kombinieren.

Zudem können maschinelle Lernverfahren verwendet werden, um die Kombination von mehreren unterschiedlichen Höhenklassifikationsverfahren zu einem Gesamtergebnis vorzunehmen. So kann beispielsweise ein neuronales Netz mit Höhenschätzungen unterschiedlicher Verfahren trainiert werden, um anschließend basierend auf dem trainierten neuronalen Netz basierend auf den Ergebnissen der unterschiedlichen Höhenklassifikationsverfahren ein Klassifikationsergebnis zu ermitteln.

Zudem kann es vorteilhaft sein, die Kombination unterschiedlicher Höhenklassifikationsverfahren abhängig von der jeweiligen Fahrsituation vorzunehmen. So kann es beispielsweise bei einer Senkrechteinparksituation vorteilhaft sein, andere Höhenklassifikationsverfahren zu verwenden als bei einer Fahrsituation, bei der das Fahrzeug seitlich an Objekten vorbeifährt (sog. Objekt-Scanning). Die passende Auswahl von Höhenklassifikationsverfahren abhängig von der jeweiligen Fahrsituation setzt jedoch voraus, dass die Fahrsituation korrekt erkannt wurde.

Da die Erkennung der Fahrsituation Fehlern unterliegen kann, kann es vorteilhaft sein, bei der Höhenklassifikation neben der Information, welche Fahrsituation aktuell vorliegt, auch Information hinsichtlich der Fehlerwahrscheinlichkeit, dass die Fahrsituation fälschlicherweise erkannt wurde, zu verwenden.

Hierbei kann wie folgt vorgegangen werden:
Zunächst werden auf die aktuelle Fahrsituation alle bekannten Szenarios angewandt. Das bedeutet, dass bei der aktuellen Fahrsituation basierend auf unterschiedlichen Szenarien jeweils mehrere Höhenklassifikationsverfahren durchgeführt und deren Ergebnisse zu Gesamtergebnissen kombiniert werden. Dadurch wird erreicht, dass für die aktuelle Fahrsituation mehrere Höhenklassifikationsergebnisse erhalten werden, und zwar jeweils ein Höhenklassifikationsergebnis pro Szenario. Das Höhenklassifikationsergebnis gibt dabei beispielsweise eine Wahrscheinlichkeit an, dass das erkannte Objekt einer bestimmten Höhenklasse zuzuordnen ist.

Anschließend wird das im vorherigen Schritt erhaltene Höhenklassifikationsergebnis jedes Szenarios mit der Wahrscheinlichkeit verknüpft, dass die aktuelle Fahrsituation dem Szenario entspricht. Damit ergibt sich die Wahrscheinlichkeit, dass ein bestimmtes Objekt einer bestimmten Höhenklassifikation (z.B. hoch) zuzuordnen ist, aus folgendem Zusammenhang:

$$p(hoch) = p(hoch, Sz.1) + p(hoch, Sz.2) + \cdots + p(hoch, Sz.n)$$

Dabei bedeutet:

p(hoch): Wahrscheinlichkeit, dass das erkannte Objekt hoch ist;
p(hoch,Sz.n): Wahrscheinlichkeit, dass das erkannte Objekt hoch ist, bei Szenario n, wobei n= 1, 2, ...

Dies ist gleichbedeutend mit:

p(hoch) = p(hochl Sz. 1) * p(Sz. 1) + p(hoch| Sz. 2) * p(Sz. 2) + ⋯ + p(hoch| Sz.n) * p(Sz. n)

Dabei bedeutet:

p(hoch): Wahrscheinlichkeit, dass das erkannte Objekt hoch ist;
p(hoch|Sz.n): Wahrscheinlichkeit, dass das erkannte Objekt hoch istunter der Bedingung, dass Szenario n vorliegt, wobei n= 1, 2, ...
p(Sz.n): Wahrscheinlichkeit, dass die Fahrsituation Szenario n entspricht.

Auch hier kann ein maschinelles Lernverfahren verwendet werden, um basierend darauf die Höhenklassifikation vorzunehmen. So kann beispielsweise ein neuronales Netz verwendet werden, wobei die Wahrscheinlichkeiten, dass die aktuelle Fahrsituation bestimmten Szenarien entspricht, als Eingangsgrößen für das neuronale Netz verwendet werden und als Ausgangsgröße eine Information bereitgestellt wird, die angibt, in welche Höhenkategorie ein erkanntes Objekt einzugruppieren ist.

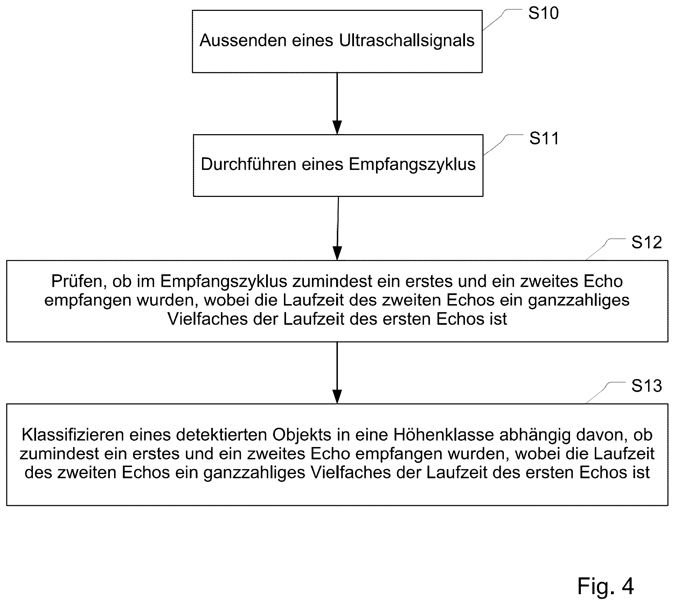

Fig. 4 zeigt in schematischer Darstellung die Schritte eines erfindungsgemäßen Verfahrens zur Höhenklassifikation eines Objekts.

Zunächst wird ein Ultraschallsignal durch einen Ultraschallsensor 2 des Fahrzeugs 1 in einem Sendezyklus ausgesendet (S10).

Anschließend wird ein Empfangszyklus durchgeführt. Der Empfangszyklus weist ein Empfangszeitfenster auf, das einen Empfang von Echos mit einer Laufzeit ermöglicht, die zumindest der doppelten Empfangsreichweite des Ultraschallsensors 2 entspricht (S11).

Daraufhin wird geprüft, ob in dem Empfangszyklus zumindest ein erstes und ein zweites Echo empfangen wurden, wobei die Laufzeit des zweiten Echos einem ganzzahligen Vielfachen der Laufzeit des ersten Echos entspricht (S12).

Die Klassifikation eines detektierten Objekts in eine Höhenklasse erfolgt abhängig davon, ob zumindest ein erstes und ein zweites Echo empfangen wurden, wobei die Laufzeit des zweiten Echos ein ganzzahliges Vielfaches der Laufzeit des ersten Echos ist (S13).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

**Bezugszeichenliste**

1    Fahrzeug
2    Ultraschallsensor
3    niedriges Objekt
4    hohes Objekt

h    Höhe

**Patentansprüche**

1. Verfahren zur Höhenklassifikation eines Objekts (3, 4) mittels zumindest eines Ultraschallsensors (2) eines Fahrzeugs (1) umfassend folgende Schritte:

a) Aussenden eines Ultraschallsignals durch den Ultraschallsensor (2) des Fahrzeugs (1) in einem Sendezyklus (S10);
b) Durchführen eines Empfangszyklus, wobei der Empfangszyklus ein Empfangszeitfenster aufweist, das einen Empfang von Echos mit einer Laufzeit ermöglicht, die zumindest der doppelten Empfangsreichweite des Ultraschallsensors (2) entspricht (S11);
c) Prüfen, ob in dem Empfangszyklus zumindest ein erstes und ein zweites Echo empfangen wurden, wobei die Laufzeit des zweiten Echos einem ganzzahligen Vielfachen der Laufzeit des ersten Echos entspricht (S12);
d) Klassifikation eines detektierten Objekts (3, 4) in eine Höhenklasse abhängig davon, ob zumindest ein erstes und ein zweites Echo empfangen wurden, wobei die Laufzeit des zweiten Echos ein ganzzahliges Vielfaches der Laufzeit des ersten Echos ist (S13),

**dadurch gekennzeichnet,**

**dass** das Fahrzeug (1) eine Recheneinheit aufweist, die zusätzlich zu dem Höhenklassifikationsverfahren gemäß den Schritten a) bis d) als erstes Verfahren zumindest ein weiteres, zweites Verfahren zur Höhenklassifikation bereitstellt, wobei eine Höhenklassifikation basierend auf einer gewichteten Kombination der Klassifikationsergebnisse des ersten und zweiten Verfahrens erfolgt.

2. Verfahren nach Anspruch 1, **dadurch gekennzeichnet, dass** ein Objekt als hohes Objekt (4) klassifiziert wird, wenn ein zweites Echo erkannt wurde, dessen Laufzeit einem ganzzahligen Vielfachen der Laufzeit des ersten Echos entspricht, wobei ein hohes Objekt (4) zumindest eine Höhe gleich der vertikal gemessenen Höhe (h), in der der Ultraschallsensor (2) am Fahrzeug (1) vorgesehen ist, aufweist.

3. Verfahren nach Anspruch 1 oder 2, **dadurch gekennzeichnet, dass** ein Objekt als niedriges Objekt (3) klassifiziert wird, wenn kein zweites Echo erkannt wurde, dessen Laufzeit einem ganzzahligen Vielfachen der Laufzeit des ersten Echos entspricht, wobei ein niedriges Objekt (3) eine Höhe kleiner als die vertikal gemessene Höhe (h), in der der Ultraschallsensor (2) am Fahrzeug (1) vorgesehen ist, aufweist.

4. Verfahren nach einem der vorhergehenden Ansprüche, **dadurch gekennzeichnet, dass** für den Fall dass im Empfangszyklus zumindest drei Echos empfangen werden, wobei die Laufzeit des zweiten Echos ein ganzzahliges Vielfaches des ersten Echos ist und das dritte Echo eine Laufzeit aufweist, die kein gemeinsames Vielfaches der Laufzeit des ersten Echos ist, zwei Objekte (3, 4) detektiert werden, wobei ein erstes Objekt, das dem ersten und zweiten Echo zugeordnet ist, als hohes Objekt (4) klassifiziert wird und ein zweites Objekt, das dem dritten Echo zugeordnet ist, als niedriges Objekt (3) klassifiziert wird.

5. Verfahren nach Anspruch 4, **dadurch gekennzeichnet, dass** zusätzlich geprüft wird, ob das erste und zweite Objekt (3, 4) den gleichen Azimutwinkel in Bezug auf den Ultraschallsensor hat.

6. Verfahren nach einem der vorangehenden Ansprüche, **dadurch gekennzeichnet, dass** ein maschinelles Lernverfahren verwendet wird, um Gewichtungsfaktoren zu ermitteln und/oder nach deren Ermittlung zu modifizieren, um basierend auf diesen Gewichtungsfaktoren die gewichtete Kombination der Klassifikationsergebnisse des ersten und zweiten Verfahrens vorzunehmen.

7. Verfahren nach einem der vorangehenden Ansprüche, **dadurch gekennzeichnet, dass** abhängig von der aktuellen Fahrsituation zunächst ein Erfassungsszenario bestimmt wird und dass basierend auf dem ermittelten Erfassungsszenario eine Auswahl des zumindest einen weiteren Höhenklassifikationsverfahrens vorgenommen wird, basierend auf dem in diesem ermittelten Erfassungsszenario eine Höhenklassifikation möglich ist.

8. Verfahren nach einem der vorhergehenden Ansprüche, **dadurch gekennzeichnet, dass** basierend auf Wahrscheinlichkeitswerten, die die Wahrscheinlichkeit angeben, dass die aktuelle Fahrsituation des Fahrzeugs (1) einem bestimmten Erfassungsszenario zuzuordnen ist, eine Wahrscheinlichkeit berechnet wird, dass ein Objekt in eine bestimmte Höhenkategorie einzugruppieren ist, und zwar basierend auf einer Summe von bedingten Wahrscheinlichkeitswerten, wobei die bedingten Wahrscheinlichkeitswerte jeweils angeben, wie hoch die Wahrscheinlichkeit ist, dass ein Objekt in eine bestimmte Höhenkategorie unter der Bedingung, dass ein bestimmtes Erfassungsszenario vorliegt, einzuordnen ist.

9. System zur Höhenklassifikation eines Objekts (3, 4) umfassend zumindest einen Ultraschallsensor (2) und eine Recheneinheit, die zur Auswertung der vom Ultraschallsensor (2) bereitgestellten Informationen ausgebildet ist, wobei das System dazu ausgebildet ist, folgende Schritte zu vollziehen:

   a) Aussenden eines Ultraschallsignals durch den Ultraschallsensor (2) des Fahrzeugs (1) in einem Sendezyklus;
   b) Durchführen eines Empfangszyklus, wobei der Empfangszyklus ein Empfangszeitfenster aufweist, das einen Empfang von Echos mit einer Laufzeit ermöglicht, die zumindest der doppelten Empfangsreichweite des Ultraschallsensors (2) entspricht;
   c) Prüfen, ob in dem Empfangszyklus zumindest ein erstes und ein zweites Echo empfangen wurden, wobei die Laufzeit des zweiten Echos einem ganzzahligen Vielfachen der Laufzeit des ersten Echos entspricht;
   d) Klassifikation eines detektierten Objekts (3, 4) in eine Höhenklasse abhängig davon, ob zumindest ein erstes und ein zweites Echo empfangen wurden, wobei die Laufzeit des zweiten Echos ein ganzzahliges Vielfaches der Laufzeit des ersten Echos ist,

**dadurch gekennzeichnet,**

**dass** die Recheneinheit zusätzlich zu dem Höhenklassifikationsverfahren gemäß den Schritten a) bis d) als erstes Verfahren zumindest ein weiteres, zweites Verfahren zur Höhenklassifikation bereitstellt, wobei eine Höhenklassifikation basierend auf einer gewichteten Kombination der Klassifikationsergebnisse des ersten und zweiten Verfahrens erfolgt.

10. System nach Anspruch 9, **dadurch gekennzeichnet, dass** die Recheneinheit dazu ausgebildet ist, ein Objekt als hohes Objekt (4) zu klassifizieren, wenn ein zweites Echo erkannt wurde, dessen Laufzeit einem ganzzahligen Vielfachen der Laufzeit des ersten Echos entspricht, wobei ein hohes Objekt (4) zumindest eine Höhe gleich der vertikal gemessenen Höhe (h), in der der Ultraschallsensor (2) am Fahrzeug (1) vorgesehen ist, aufweist.

11. System nach Anspruch 9 oder 10, **dadurch gekennzeichnet, dass** die Recheneinheit dazu ausgebildet ist, ein Objekt als niedriges Objekt (3) zu klassifizieren, wenn kein zweites Echo erkannt wurde, dessen Laufzeit einem ganzzahligen Vielfachen der Laufzeit des ersten Echos entspricht, wobei ein niedriges Objekt (3) eine Höhe kleiner als die vertikal gemessene Höhe (h), in der der Ultraschallsensor (2) am Fahrzeug (1) vorgesehen ist, aufweist.

12. System nach einem der Ansprüche 9 bis 11, **dadurch gekennzeichnet, dass** die Recheneinheit dazu ausgebildet ist, für den Fall dass im Empfangszyklus zumindest drei Echos empfangen werden, wobei die Laufzeit des zweiten Echos ein ganzzahliges Vielfaches des ersten Echos ist und das dritte Echo eine Laufzeit aufweist, die kein gemeinsames Vielfaches der Laufzeit des ersten Echos ist, zwei Objekte (3, 4) zu detektieren, wobei ein erstes Objekt, das dem ersten und zweiten Echos zugeordnet ist, als hohes Objekt (4) klassifiziert wird und ein zweites Objekt, das dem dritten Echo zugeordnet ist, als niedriges Objekt (3) klassifiziert wird.

13. System nach Anspruch 12, **dadurch gekennzeichnet, dass** die Recheneinheit dazu ausgebildet ist, zusätzlich zu überprüfen, ob das erste und zweite Objekt (3, 4) den gleichen Azimutwinkel in Bezug auf den Ultraschallsensor haben.

14. Fahrzeug umfassend ein System gemäß einem der Ansprüche 9 bis 13.

Fig. 1

Fig. 2

Fig. 3

S10

Aussenden eines Ultraschallsignals

S11

Durchführen eines Empfangszyklus

S12

Prüfen, ob im Empfangszyklus zumindest ein erstes und ein zweites Echo empfangen wurden, wobei die Laufzeit des zweiten Echos ein ganzzahliges Vielfaches der Laufzeit des ersten Echos ist

S13

Klassifizieren eines detektierten Objekts in eine Höhenklasse abhängig davon, ob zumindest ein erstes und ein zweites Echo empfangen wurden, wobei die Laufzeit des zweiten Echos ein ganzzahliges Vielfaches der Laufzeit des ersten Echos ist

Fig. 4